# EUROPEAN PATENT APPLICATION

(11) **EP 1 496 566 A1**
(43) Date of publication of application: **12.01.2005**
(21) Application number: 02722708.1
(22) Date of filing: 18.04.2002
(51) Int. Cl.: H01Q 1/38, H01Q 1/24

(54) **CELLULAR PHONE AND ANTENNA BUILT THEREIN**

(71) Applicant: MITSUBISHI DENKI KABUSHIKI KAISHA, Tokyo 100-8310 (JP)
(72) Inventor: TAKETOMI, Hirokazu, c/o Mitsubishi Denki K. K., Tokyo 100-8310 (JP); BABA, Fumiaki, c/o Mitsubishi Denki K. K., Tokyo 100-8310 (JP); SUNAHARA, Yonehiko, c/o Mitsubishi Denki K. K., Tokyo 100-8310 (JP); IMANISHI, Yasuhito, c/o Mitsubishi Denki K. K., Tokyo 100-8310 (JP); TANAKA, Tetsuya, c/o Mitsubishi Denki K. K., Tokyo 100-8310 (JP)
(74) Representative: Sajda, Wolf E., Dipl.-Phys.
(86) International application number: PCT/JP2002/003894
(87) International publication number: WO 2003/088416

(57) **Abstract**

The present invention relates to a cell phone comprising a built-in antenna, and particularly, has an object to provide a cell phone which properly reduces a physical size of an antenna element, decreases a weight and satisfies an impact resistance, and suppresses a variation in a dimension which is caused by mass production and considers an actual use state in which a hand or the like approaches.

In order to achieve the object described above, a dielectric (15) between an antenna element (2a) and a ground (6) is a support member of a cyclo-olefin polymer in a plating grade having an impact resistance which is obtained by blending styrene type rubber, polyolefin type rubber (elastomer) or both of them, and the antenna element (2a) is constituted by a plating formed on a main surface of the dielectric (15).

## Description

### Technical Field

The present invention relates to a cell phone comprising a built-in antenna and the built-in antenna.

### Background Art

Fig. 6 shows an example (a conventional example 1) of a conventional cell phone comprising a built-in antenna. In the cell phone according to the conventional example 1, as shown in Fig. 6, a phosphor bronze plate or the like is plated with nickel for an anticorrosive treatment, and furthermore, is plated with gold to form an antenna element 2, and the antenna element 2 is stuck to an internal surface of a body rear case 1 with a double-sided tape or the like. In Fig. 6, the reference numeral 4 denotes a connection part to be connected to a power feeding point 3 of the antenna element 2, the reference numeral 5 denotes a circuit board mounting a radio communication circuit, a liquid crystal display portion (LCD) and various operation keys and the like (not shown), the reference numeral 6 denotes a ground part of the circuit board 5, the reference numeral 7 denotes a body front case, the reference numeral 8 denotes a battery, the reference numeral 9 denotes a display window for exposing the liquid crystal display portion (LCD) of the circuit board 5 to the body front case 7 side, and the reference numeral 10 denotes a key hole for exposing the operation key of the circuit board 5 to the body front case 7 side.

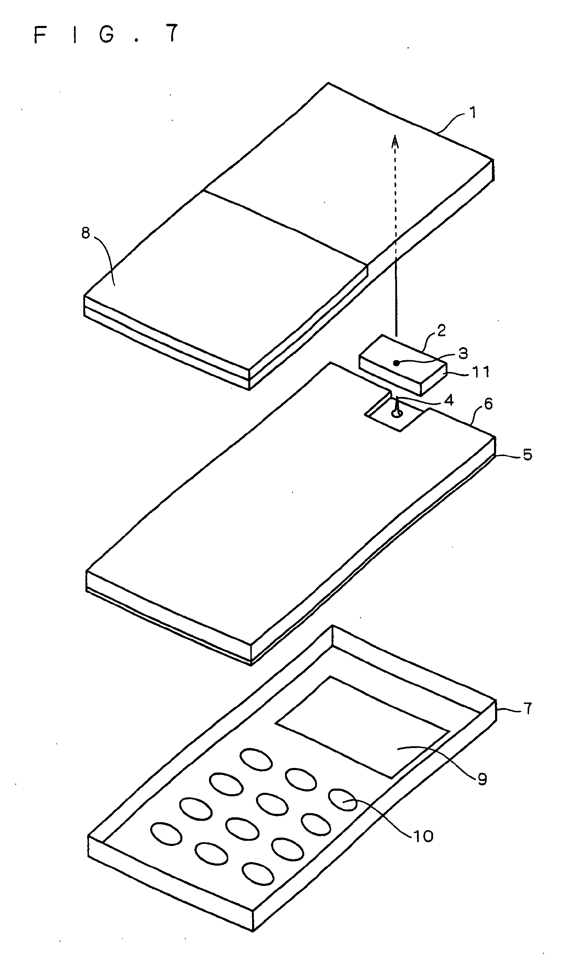

Fig. 7 shows another example (a conventional example 2) of the conventional cell phone comprising a built-in antenna. In the conventional example 2, elements having the same functions as those in the conventional example 1 shown in Fig. 6 have the same reference numerals. In the cell phone according to the conventional example 2, as shown in Fig. 7, the same antenna element 2 formed by a metal plate as that in the conventional example 1 is directly stuck to a block-shaped dielectric 11 having a low dielectric constant and a low dielectric dissipation factor such as PTFE (Polytetrafluoroethylene), or a block-shaped dielectric 11 such as an LCP (Liquid-crystal polymer) is plated by printing or the dielectric 11 is plated with resin by an MID (Molded Interconnection Device) to constitute a built-in antenna and is disposed on a ground 6. The MID is a circuit component having a three-dimensional shape which forms a conductive circuit on a predetermined member such as plastic moldings and serves to make the best of a free three-dimensionality to have a mechanical function or an electrical function. Recently, the method of directly sticking the antenna element 2 to the block-shaped dielectric 11 such as PTFE (Polytetrafluoroethylene) is unsuitable for the case in which the antenna element 2 is constituted on a side surface or a back face of the block-shaped dielectric 11 and, particularly, a variation is caused in a height direction (a clearance between the antenna element 2 and the ground 6). For this reason, this method is rarely carried out.

In both the structures of the conventional examples 1 and 2, a power is supplied from the circuit board 5 to the antenna element 2 through the connection part 4 and a radio wave is radiated from the antenna element 2. In order to efficiently radiate the radio wave from the antenna element 2, it is required that a resonant frequency f0 of the antenna element 2 ranges within a center frequency fm in a working frequency band, and a VSWR (voltage standing-wave ratio) is set to be at least 3 or less and a return loss {R. L.} is -1.3 dB or less in the working frequency band. Moreover, it is also important that a loss caused by the dielectric dissipation factor of the block-shaped dielectric 11 or the like is lessened. An antenna radiation efficiency required for system specifications of a cell phone is varied and is generally -3 dB or more by putting together a return loss caused by a high VSWR (voltage standing-wave ratio), a loss caused by the dielectric dissipation factor of the block-shaped dielectric 11 and a loss caused by an approach of an operator's hand having a high dielectric dissipation factor.

A factor for determining the VSWR (voltage standing-wave ratio) and the resonant frequency of an antenna in a working frequency band includes a size of the antenna element 2, a distance between the antenna element 2 and the ground 6 of the circuit board 5 provided thereunder (which is equal to a height or thickness of the block-shaped dielectric 11) and a relative dielectric constant of the block-shaped dielectric 11 provided between the antenna element 2 and the ground 6 disposed thereunder. The relative dielectric constant determines a bandwidth of the antenna element 2. In order to lessen the loss caused by the block-shaped dielectric 11, a dielectric dissipation factor is to be reduced.

In general, a bandwidth ratio (a bandwidth / a center frequency) required for an antenna of a cell phone is varied depending on the system specifications of the cell phone. For example, a PDC (personal digital cellular) used in Japan has a working frequency band of 810 MHz to 958 MHz. If the built-in antenna element 2 is used as an antenna for exclusive receiving, it is sufficient that a bandwidth ratio is 2.2 % (810 MHz to 828 MHz). In case of CDMA (code division multiple access), moreover, a working frequency is 1920 MHz to 2170 MHz. If the built-in antenna element 2 is used as the antenna for exclusive receiving, it is sufficient that the bandwidth ratio is 2.8 % (2110 MHz to 2170 MHz).

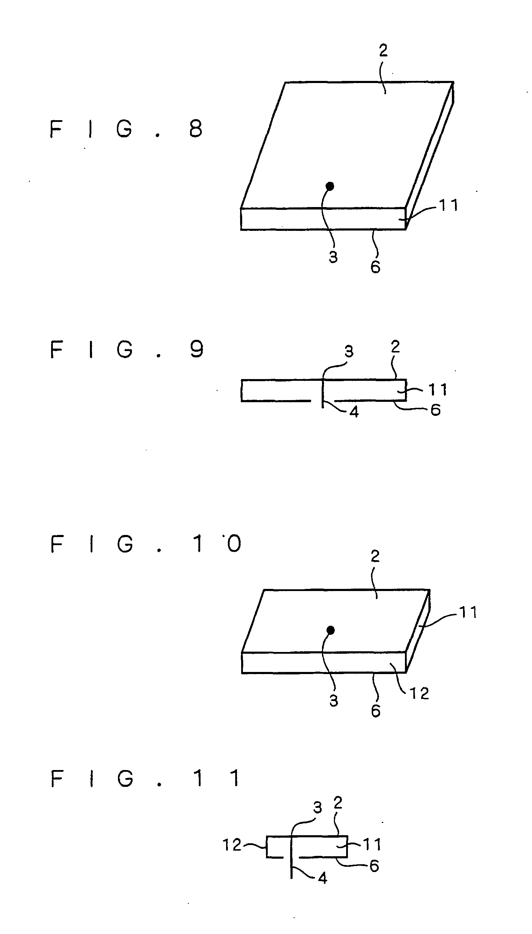

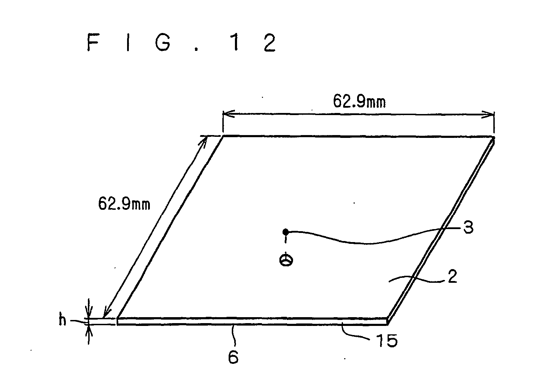

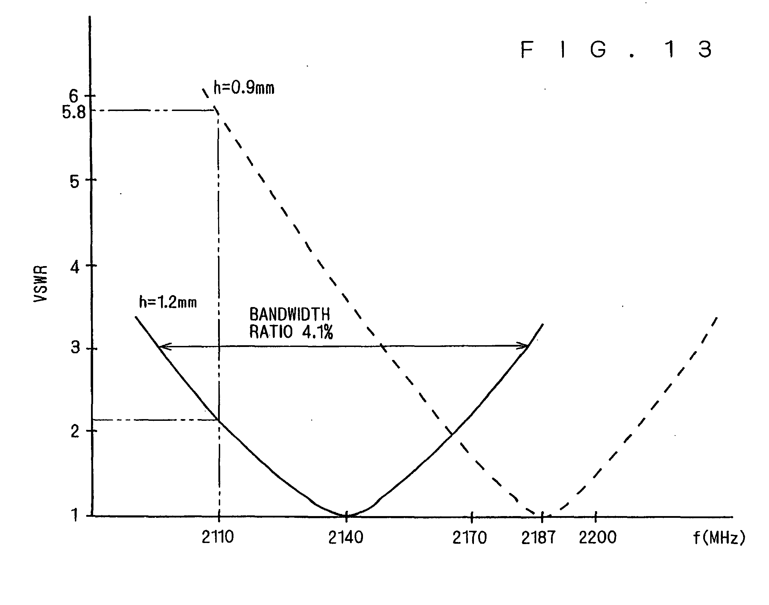

In case of the CDMA, for example, a microstrip antenna shown in Figs. 8 and 9 may be used as the antenna element 2. If a one-sided short-circuit type microstrip antenna shown in Figs. 10 and 11 is used, the same performance can be obtained with an almost half of a size of the microstrip antenna shown in Figs. 8 and 9, for example, which is advantageous to an area efficiency.

A variation in a distance between the antenna element 2 and the ground 6 which is caused by a tolerance in an assembly is one factor for determining the resonant frequency of the antenna element 2. In case of the conventional example 1 in which the antenna element 2 is stuck to the body rear case 1, a sticking position is determined on the basis of a fitting surface of the body front case 7 and the body rear case 1 which gives a fine appearance. Therefore, the variation in the distance between the antenna element 2 and the ground 6 depends on precision in dimensions of the body front case 7 and the body rear case 1 and is slightly great, that is, approximately 0.3 mm.

In case of the conventional example 2 in which the antenna element 2 is constituted on the block-shaped dielectric 11 and is disposed on the ground 6, moreover, the variation in the distance between the antenna element 2 and the ground 6 is approximately 0.1 mm to be a general tolerance. In consideration of these matters, it is necessary to constitute the antenna and to optimally select characteristics of a relative dielectric constant and a dielectric dissipation factor of a dielectric. If not so, there is a problem in that a set resonant frequency of the antenna is varied, and furthermore, a variation in an antenna performance is increased and speech quality is not stabilized.

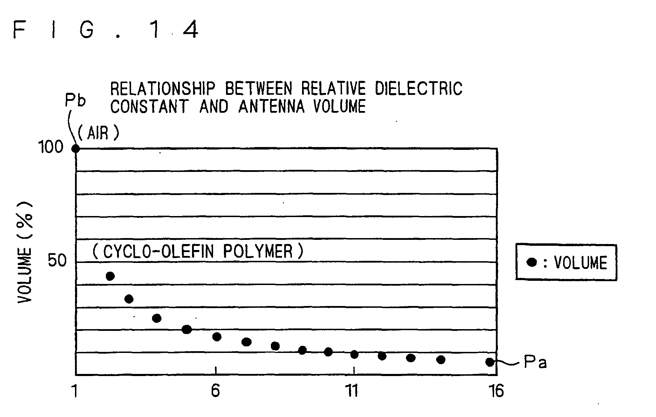

More specifically, the conventional example 1 (Fig. 6) will be taken as an example. In the case in which the antenna element 2 is stuck to the body rear case 1, the sticking position is determined on the basis of the fitting surface of the body front case 7 and the body rear case 1 which gives a fine appearance. Therefore, an assembly error between the antenna element 2 and the ground 6 is ±0.3 mm as described above. There will be considered the case in which the antenna element 2 is constituted by an area of 62.9 mm X 62.9 mm (3956.4 mm²) as shown in Fig. 12, for example. A relative dielectric constant between an antenna and a ground is 1.0 because air is only present. A relationship between a resonant frequency f (MHz) and a VSWR (voltage standing-wave ratio) is shown in Fig. 13. Fig. 13 shows both the case in which a clearance h between the antenna element 2 and the ground 6 is implemented to be 1.2 mm which is a dimension for a design (see a solid curve) and the case in which the distance h is 0.9 (= 1.2 - 0.3) mm in consideration of the fact that an assembly error is ±0.3 mm as described above (see a broken curve). As shown in Fig. 13, the resonant frequency f is 2140 MHz with the distance h = 1.2 mm, while the resonant frequency f is shifted to 2187 MHz with the distance h = 0.9 mm. While the VSWR obtained when a band end frequency f is 2110 MHz is 2.1 with the distance h = 1.2 mm (that is, a return loss {R. L.} = -0.6 dB), for example, it is increased to 5.8 with the distance h = 0.9 mm (that is, a return loss {R. L.} = -3.0 dB) so that a reflection loss of -2.4 dB is caused. For this reason, mass production cannot be achieved.

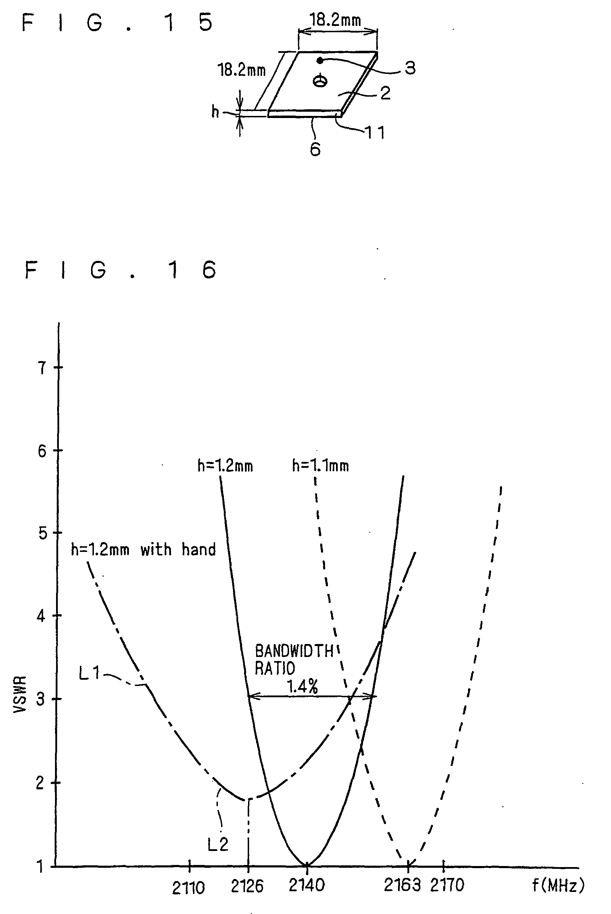

On the other hand, for example, in the case in which ceramics particles of BaTiO₃ containing Sr in a weight ratio of 83% and a polyolefin type polymer matrix in a weight ratio of 17% are mixed to be a composite material as the dielectric having the structure according to the conventional example 2 (for example, Japanese Patent Application Laid-Open No. 6-140830 (1994)), a relative dielectric constant is 15.8. By using the dielectric, a volume can be reduced to be 10% or less as compared with the conventional example 1 shown in Fig. 6 (the designation Pb in Fig. 14) as is indicated by the designation Pa of Fig. 14 so that a size of the antenna 2 can be decreased by a wavelength shortening effect produced by the relative dielectric constant of the dielectric.

In this case, however, a bandwidth ratio with a VSWR of 3 or less is 1.1% (not shown) and the VSWR is 12.4 at a band end of 2110 MHz and 2170 MHz (that is, a return loss {R. L} = -5.6 dB), and therefore, the mass production cannot be achieved.

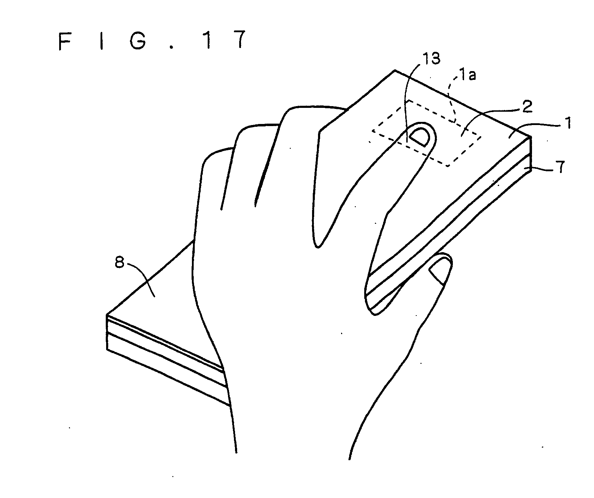

In this case, if the antenna element 2 is constituted with an area of 18.2 mm X 18.2 mm as shown in Fig. 15, for example, a relationship between the resonant frequency f (MHz) and the VSWR (voltage standing-wave ratio) shown in Fig. 16 is obtained. An error in a height direction (h) of the antenna element 2 shown in the structure of Fig. 15 is ±0.1 mm. Fig. 16 shows the case in which the clearance h between the antenna element 2 and the ground 6 is implemented to be 1.2 mm which is a dimension for a design (see a solid curve) and the case in which the distance h is 1.1 (= 1.2 - 0.1) mm (see a broken curve). As shown in Fig. 16, the resonant frequency f is 2140 MHz with the distance h = 1.2 mm (a state in which shielding is not carried out with a hand 13 : see the solid curve), while the resonant frequency f is shifted to 2163 MHz with the distance h = 1.1 mm (see the broken curve). While the VSWR obtained when the band end frequency f is 2110 MHz is 12.4 with the distance h = 1.2 mm (that is, a return loss {R. L.} = -5.6 dB which is not shown), for example, it is increased to 44.6 with the distance h = 1.1 mm (that is, a return loss {R L.} = -10.7 dB which is not shown) so that a reflection loss of -5.1 dB is caused. For this reason, the mass production cannot be achieved.

Moreover, a cell phone is often held with the hand 13 for use as shown in Fig. 17. Therefore, a part of the hand 13 such as an index finger covers a portion 1a in which the antenna 2 of the body rear case 1 is provided (a portion shown in a broken line of Fig. 17) so that the same portion is shielded in some cases. With the hand 13, a preset resonant frequency of the antenna is shifted in some cases. In these cases, there is a problem in that an antenna performance is deteriorated in a working frequency band, resulting in unstable speech quality as shown in a one-dotted chain curve L1 of Fig. 16.

Furthermore, if a physical size of the built-in antenna element 2 is excessively reduced by increasing the relative constant dielectric of a dielectric block, a current flowing to the antenna element 2 concentrates. Consequently, there is a problem in that a loss caused by the hand 13 having a great dielectric dissipation factor is increased and an antenna performance is thus deteriorated, resulting in instability of the speech quality.

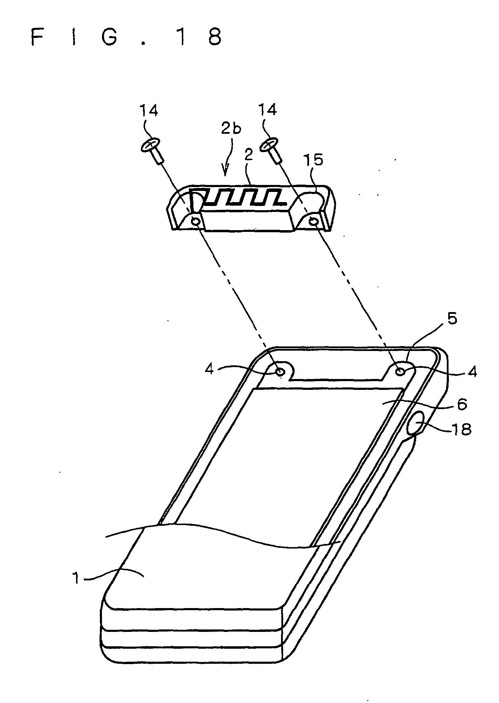

The built-in antenna element 2 of the cell phone has a twofold model shown in Fig. 18 in addition to the shape illustrated in Fig. 6 or 7. In the twofold model, a cell phone body can be bent to be folded double in a hinge portion 18. In this case, the antenna element 2 is mounted by fixing an attachment member 2b shown in Fig. 18 to the circuit board 5 with a screw 14. In this case, there is a problem in that a great impact is given to a portion in which the antenna 2 is provided so that the antenna element 2 might be broken to deteriorate the antenna performance, resulting in unstable speech quality if dropping is carried out with the attachment portion of the antenna element 2 turned downward.

In some cases, the built-in antenna element 2 of the cell phone is soldered onto the circuit board 5 mounting a radio part by reflow in order to suppress a deterioration in the antenna performance which is caused by a reduction in a process and a variation in an attachment position. A dielectric resistant to the reflow includes an LCP (Liquid-crystal polymer). However, there is a problem in that the LCP has a great specific gravity and is therefore unstable for a cell phone requiring a reduction in a weight.

### Disclosure of the Invention

It is an object of the present invention to solve the problems described above and to properly reduce a physical size of an antenna element, to decrease a weight and satisfy an impact resistance, to suppress a variation in a dimension in mass production, and to set speech quality to a level having no problem in consideration of an actual use state in which a hand or the like approaches in a built-in antenna of a cell phone.

According to a first aspect of a cell phone in accordance with the present invention, a cell phone comprises a built-in antenna having a support member of a dielectric (15) between an antenna element (2a) and a ground (6), wherein the dielectric (15) is constituted by a cyclo-olefin polymer blending styrene type rubber, polyolefin type rubber or both of them, and the antenna element (2) is constituted by a plating formed on a main surface of the support member.

Consequently, an antenna element having a proper size and a high performance can be formed in the cell phone and a necessary bandwidth ratio can be obtained, and speech quality is not greatly influenced even if a variation in an assembly of mass production and an influence of a hand in actual use are taken into consideration. Moreover, the styrene type rubber, the polyolefin type rubber or both of them is/are blended with the cyclo-olefin polymer. Therefore, a sufficient impact strength is obtained and a clearance between the antenna element and an inner part of a housing does not need to be taken excessively. Thus, a dimension of an appearance of the cell phone can be more reduced than that in the case in which a material having a small impact strength is to be used. Furthermore, a density is low. Consequently, a weight of the antenna element can be reduced, and furthermore, a great contribution to a reduction in a weight of the cell phone can be made.

It is desirable that the dielectric (15) should be a molded product using the cyclo-olefin polymer in a plating grade having a low dielectric constant and a low dielectric dissipation factor by blending elastomer to be polyolefin type rubber.

It is further desirable that the ground should be constituted by a predetermined shield box, and the shield box should include a molded product using the cyclo-olefin polymer in a plating grade and a plating formed on the molded product and should be formed integrally with the antenna element.

Objects, features, aspects and advantages of the present invention will be more apparent from the following detailed description and the accompanying drawings.

### Brief Description of the Drawings

Fig. 1 is a perspective view showing an example of an internal structure of a cell phone according to a first embodiment of the present invention.

Fig. 2 is a perspective view showing another example of the internal structure of the cell phone according to the first embodiment of the present invention.

Fig. 3 is a perspective view showing a built-in antenna of the cell phone according to the first embodiment of the present invention.

Fig. 4 is a chart showing a relationship between a resonant frequency of the built-in antenna and a VSWR in the cell phone according to the first embodiment of the present invention.

Fig. 5 is a chart showing a relationship between a dielectric dissipation factor and an antenna radiation efficiency in the built-in antenna of the cell phone according to the first embodiment of the present invention.

Fig. 6 is an exploded perspective view showing an example of an internal structure of a conventional cell phone.

Fig. 7 is an exploded perspective view showing another example of the internal structure of the conventional cell phone.

Fig. 8 is a perspective view showing an example of a built-in antenna of the conventional cell phone.

Fig. 9 is a sectional view showing the example of the built-in antenna of the conventional cell phone.

Fig. 10 is a perspective view showing another example of the built-in antenna of the conventional cell phone.

Fig. 11 is a sectional view showing another example of the built-in antenna of the conventional cell phone.

Fig. 12 is a perspective view showing a built-in antenna of a cell phone according to a conventional example 1.

Fig. 13 is a chart showing a relationship between a resonant frequency of the built-in antenna and a VSWR in the cell phone according to the conventional example 1.

Fig. 14 is a chart showing a relationship between a relative dielectric constant of a dielectric between an antenna element and a ground and a volume of an antenna.

Fig. 15 is a perspective view showing a built-in antenna of a cell phone according to a conventional example 2.

Fig. 16 is a chart showing a relationship between a resonant frequency of a built-in antenna and a VSWR in the cell phone according to the conventional example 2.

Fig. 17 is a view showing a state in which a hand covers a position on which the built-in antenna is mounted.

Fig. 18 is a perspective view showing a cell phone of a twofold model, which is partially taken away.

### Best Mode for Carrying Out the Invention

### 1. First Embodiment

In a built-in antenna of a cell phone, generally, the inventor examined conditions of a characteristic required for a material of a dielectric between an antenna element and a ground. As a result, the following items (1) to (6) can be given.
(1) A relative dielectric constant is equal to or smaller than 3,
(2) a dielectric dissipation factor is low, that is, 0.0002 or less,
(3) plating can be carried out by an MID (Molded Interconnection Device) or a printing method,
(4) an impact strength is at least equal to or greater than that (30J) of ABS (Acrylonitrile-butadiene-styrene) which is generally used in a cell phone,
(5) a heat resistance to solder reflow is held, and
(6) a density is low.

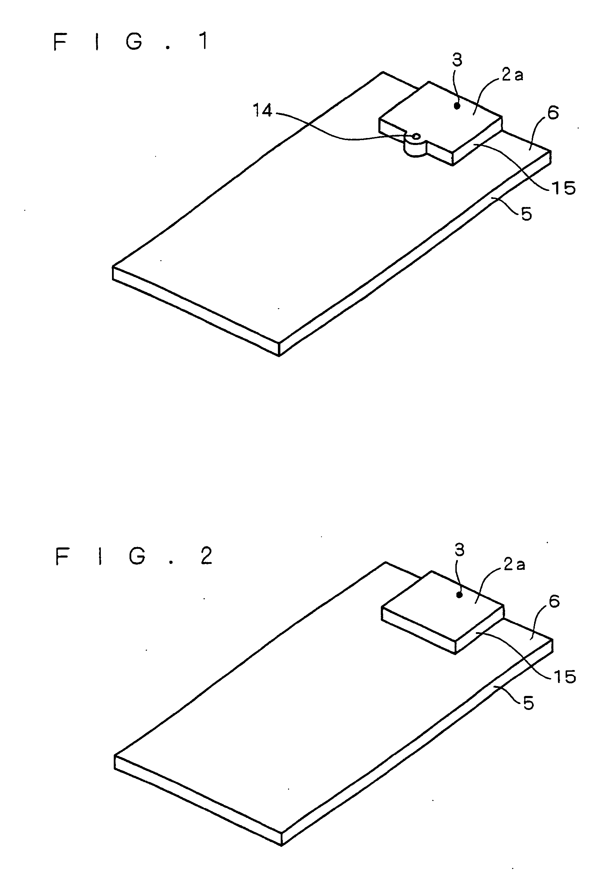

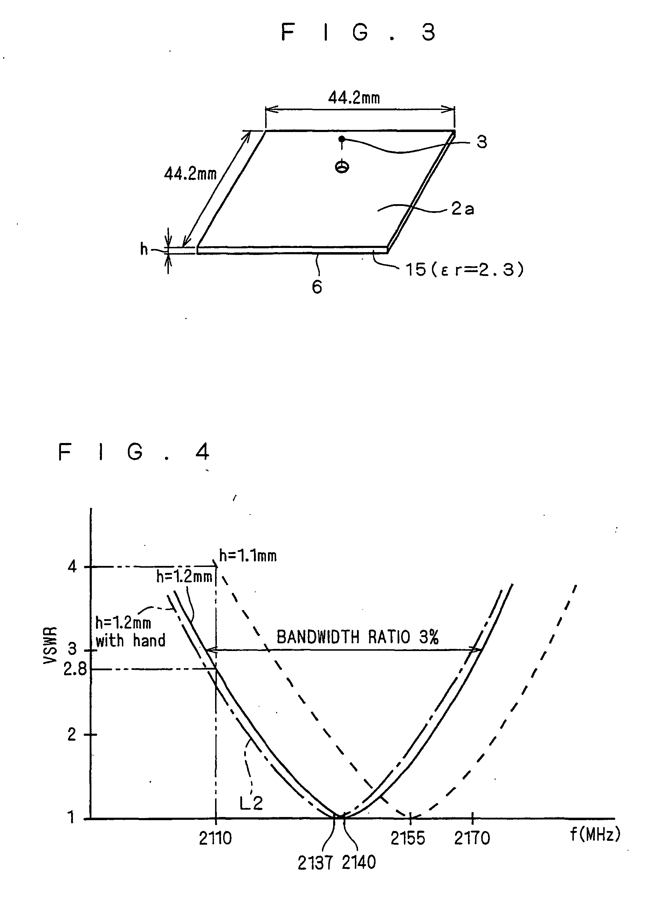

The inventor examined a material which can be used as an antenna element (the designation 2a in Figs. 1 and 2) of a built-in antenna. As a result, it was found that materials listed in the following Table 1 can be given.

**Table 1**

| | Relative dielectric constant | Dielectric dissipation factor | Density | HDT(°C) | Impact strength | Defect |
|---|---|---|---|---|---|---|
| PTFE(Polyterafluoroethylene) | 2.1 | 0.0002 | 2.20 | 51 | 15.5 | Plating property, Workability |
| PP(Polypropylene) | 2.2 | 0.0002 | 0.90 | 52 | 4.9 | Plating property |
| PS(Polystyrene) | 2.4 | 0.0002 | 1.00 | 82 | 1.4 | Chemical resistance, Plating property |
| S-PS(Syndiotactic-polystyren) | 2.4 | 0.0003 | 1.10 | 220 | 1.0 | Plating property, impact strength |
| LCP(Liquid-cryatal polymer) | 2.8 | 0.002 | 1.80 | 220 | 4.0 | Density |
| COP(Cyclo-olefin polymer) | 2.3 | 0.0001 | 1.00 | 123 | 35.0 | None |
| Product described in Japanese Patent Application Laid-Open No. 6-140830 (1994) | 15.8 | 0.00044 | 2~3.5 | Unknown | Unknown | Density |

Only a COP (Cyclo-olefin polymer) satisfies the conditions (1) to (6) described above. In the cell phone according to the present embodiment, for example, polyolefin type rubber is blended with a COP (Cyclo-olefin polymer) 15 in a block-shaped plating grade to obtain a plating grade and a dielectric is caused to have an impact resistance, a low dielectric constant and a low dielectric dissipation factor, and the COP 15 plated with resin by an MID (Molded Interconnection Device) is applied to be an antenna element 2a as shown in Figs. 1 and 2. There is employed a structure in which the block-shaped COP (Cyclo-olefin polymer) 15 is fixed to a ground 6 of a circuit board 5 with a screw 14 as shown in Fig. 1 or is fixed to the ground 6 of the circuit board 5 by solder reflow as shown in Fig. 2.

Fig. 3 shows the built-in antenna of the cell phone according to the first embodiment of the present invention. In the built-in antenna of the cell phone, it is possible to reduce a size by applying the COP as a material of a dielectric. As shown in Fig. 3, therefore, a main surface of the antenna element 2a (that is, a main surface of the COP 15) is set to have a size of 44.2 mm X 44.2 mm (an area = 1953.6 mm²) and is set to have an area of 50% or less as compared with the conventional example 1 (3956.4 mm²).

It is more desirable that a structure of a one-sided short-circuit type microstrip antenna (see Figs. 10 and 11) should be employed for the antenna element 2a. The reason is that it is possible to obtain an antenna in which the main surface of the antenna element 2a (the main surface of the COP 15) has the same performance with an approximately half area (that is, an approximately quarter of the area in the conventional example 1). In the case in which the antenna is mounted on the cell phone, therefore, a sufficient performance can be retained with a smaller area, which is advantageous.

A bandwidth ratio of the antenna element 2a using the COP 15 in the plating grade as the dielectric is 3% and satisfies a bandwidth ratio of 2.8% or more to be a requirement, which is not shown in the Table 1.

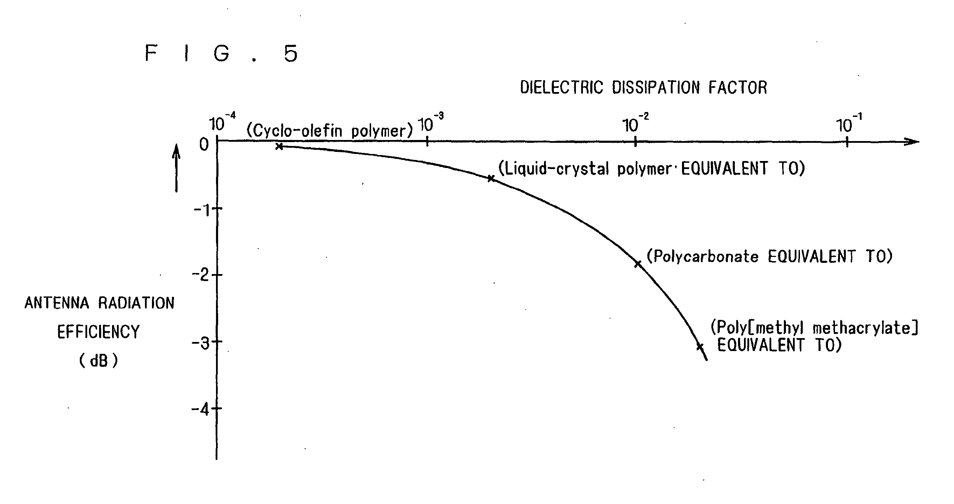

A relationship between a resonant frequency f (MHz) of the antenna element 2a and a VSWR (voltage standing-wave ratio) is obtained as shown in Fig. 4. An error in a height direction (h) of the antenna element 2a in the structure of Fig. 3 is 0.1 mm. Therefore, Fig. 4 shows three states including the case in which a clearance h between the antenna element 2a and the ground 6 is implemented to be 1.2 mm which is a dimension for a design (see a solid curve), the case in which the distance h is 1.1 (= 1.2 - 0.1) mm (see a broken curve), and the case in which the distance h is 1.2 mm and holding and shielding are carried out with a hand 13 as shown in Fig. 17 (a one-dotted chain curve L1 : see the following).

As shown in Fig. 16, in the case in which the antenna element 2a is to be formed on the main surface of the COP 15 as in the present embodiment, the resonant frequency f is 2140 MHz with the distance h = 1.2 mm (a state in which the shielding is not carried out with the hand 13 : see a solid curve) and is shifted to 2155 MHz by ±15 MHz with the distance h = 1.1 mm (see a broken curve). However, the bandwidth ratio is comparatively high, that is, 3%. For this reason, when a band end frequency f is 2110 MHz, for example, the VSWR is 2.8 (that is, a return loss {R. L} = -1.1 dB) with the distance h = 1.2 mm, and is increased to 4.0 (that is, the return loss {R. L} = -1.9 dB) with the distance h = 1.1 mm and a reflection loss is reduced to be -0.8 dB.

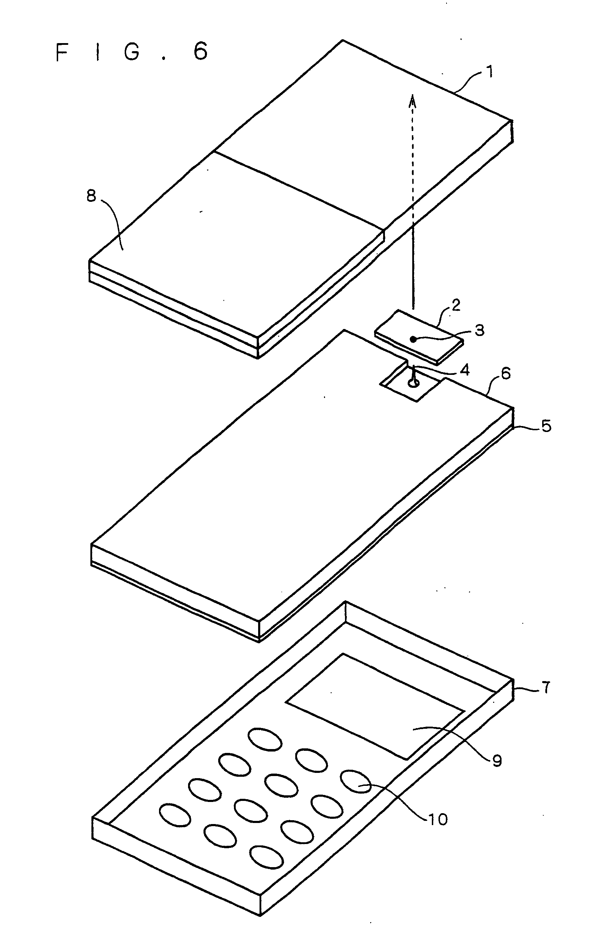

Fig. 5 shows a relationship between a dielectric dissipation factor and an antenna radiation efficiency. The dielectric dissipation factor of the COP (Cyclo-olefin polymer) 15 is set to be very small, that is, approximately 0.0001. Consequently, a deterioration in the antenna radiation efficiency is approximately -0.1 dB. In consideration of a variation in an assembly which is caused by mass production, the dielectric dissipation factor is approximately 10⁻². Therefore, it is possible to obtain an antenna radiation efficiency of -2.0 dB at the worst in Fig. 5.

In the case in which the COP 15 and the antenna element 2a in Fig. 3 are used, moreover, the relationship between the resonant frequency f and the VSWR is obtained as shown in a one-dotted chain line L2 of Fig. 4 when a finger 13 of a hand approaches in use of the cell phone as shown in Fig. 17 (assuming that the hand 13 has a relative dielectric constant of 50 and a dielectric dissipation factor of 0.5 and a clearance between the ground 6 and the hand 13 is 1 mm). Since the antenna element 2a shown in Fig. 3 has a relative dielectric constant of 2.3 (Table 1), a size of the antenna element 2a is greater than that of the antenna element 2 (18.2 mm X 18.2 mm) shown in Fig. 15. Consequently, it is apparent that an influence of the hand 13 is small and the resonant frequency is 2137 MHz (see a one-dotted chain line L2 in Fig. 4) which is shifted from the resonant frequency of 2140 by 3 MHz in the case in which the shielding is not carried out with the hand 13, and furthermore, a power to be absorbed by the hand 13 is -0.6 dB.

On the other hand, in the case in which the relative dielectric constant is 15.8 (see Figs. 15 and 16), the antenna element 2 is small and a high frequency current flowing to the antenna element 2 is blocked by the hand 13 (Fig. 17). As shown in Fig. 16, consequently, the resonant frequency is shifted to 2126 MH by 14 MHz, and furthermore, the power absorbed by the hand 13 is -6.2 dB.

In consideration of these matters altogether, the loss is -2.6 dB (= -1.9 dB - 0.1 dB - 0.6 dB) at the worst by the use of the antenna element 2a according to the present embodiment to satisfy the condition that an antenna radiation efficiency is to be -3.0 dB or less by putting together the assumed bandwidth ratio of the built-in antenna element 2a, that is, 2.8% or more, an in-band reflection loss obtained in consideration of a variation in an assembly which is caused by the mass production, a loss of a dielectric and a loss of a hand.

By the use of the antenna element 2a utilizing the COP 15 according to the present embodiment, moreover, there is no problem even if the antenna element 2a is fixed to the ground 6 with the screw 14 as shown in Fig. 1 or is directly fixed to the board 5 by solder reflow as shown in Fig. 2 because of an impact strength which is equal to or greater than that of ABS (Acrylonitrile-butadiene-styrene) to be usually used in the internal structure of the cell phone.

Furthermore, the same value as values in other portions can be used for a clearance between an internal surface of a housing (corresponding to the body rear case 1 in Figs. 6 and 7) of the cell phone and the antenna element 2a, and a size in an appearance can also be reduced as compared with use of a material having a small impact strength.

Since a density is comparatively low, that is, 1.0 for a material characteristic of the COP 15, moreover, a weight of the antenna element 2a can be reduced and a great contribution to a reduction in a weight to be an indispensable item of the cell phone can be made.

As described above, there is employed a structure in which the antenna element 2a is plated by the MID on the COP (Cyclo-olefin polymer) 15 in the plating grade in which a relative dielectric constant and a dielectric dissipation factor are optimum in the built-in antenna portion of an optimum cell phone. Therefore, an antenna performance can be enhanced and is not remarkably deteriorated with a variation in an assembly which is caused by mass production, and furthermore, the influence of the hand can also be relieved in actual use. Consequently, the antenna performance is stabilized and speech quality is made stable. As described above, moreover, the impact strength of the antenna element 2a is great. Therefore, restrictions on attachment can be lessened in the housing of the cell phone and the mass production can suitably be achieved. Furthermore, it is possible to greatly contribute to a reduction in a weight to be the indispensable item of the cell phone based on the material characteristic of the COP 15.

While the polyolefin type rubber (elastomer) is blended with the COP 15 to have the plating grade and a material having an impact resistance, a low dielectric constant and a low dissipation factor is applied as the dielectric in the present embodiment, it is also possible to apply a material obtained by blending styrene type rubber with the COP 15 which is set into the plating grade and has an impact resistance, a low dielectric constant and a low dielectric dissipation factor, for example.

### 2. Second Embodiment

While the COP (Cyclo-olefin polymer) 15 to be a block-shaped dielectric in the plating grade which is subj ected to the resin plating by the MID (Molded Interconnection Device) is applied as the antenna element 2a in the first embodiment, the same effects as those in the first embodiment can be obtained even if the block-shaped COP (Cyclo-olefin polymer) 15 subjected to the resin plating by a printing method is applied in place of such a structure. Also in this case, it is preferable that the antenna element 2a should be fixed onto the ground 6 of the circuit board 5 as shown in Figs. 1 and 2.

### 3. Third Embodiment

While the antenna element 2a is formed on the COP 15 in the plating grade and is fixed to the ground 6 provided on the circuit board 5 in each of the embodiments, for example, it is also possible to employ such a structure that a shield box for shielding a noise in which the ground 6 is to be provided is formed by the COP (Cyclo-olefin polymer) 15 in the plating grade and the antenna element 2a and the shield box (ground 6) are plated by an MID (Molded Interconnection Device), a printing method or the like in the case in which the circuit board 5 in which the ground 6 is not formed is covered with the shield box from above in Figs. 1 and 2 and a metal for shielding of the shielding box also serves as the ground 6. Thus, it is not necessary to combine the shield box and the antenna element 2a as separate members. Therefore, precision in an assembly can be prevented from being varied and it is sufficient that only precision in molding is considered. Accordingly, the clearance (the designation h in Fig. 3) between the antenna element 2a and the shield box (ground 6) is further stabilized and a variation in an assembly caused by mass production can be reduced so that an antenna performance can be stabilized and speech quality can be made stable.

While the present invention has been described in detail, the above description is only illustrative in all aspects and the present invention is not restricted thereto. It is understood that numerous variants which are not illustrated can be supposed without departing from the scope of the present invention.

## Claims

1. A cell phone comprising a built-in antenna having a support member of a dielectric (15) between an antenna element (2a) and a ground (6),
wherein said dielectric (15) is constituted by a cyclo-olefin polymer blending styrene type rubber, polyolefin type rubber or both of them, and
said antenna element (2) is a plating formed on a main surface of said support member.

2. The cell phone according to claim 1, wherein said dielectric (15) is obtained by using said cyclo-olefin polymer blending polyolefin type rubber.

3. The cell phone according to claim 1, wherein said ground is constituted by a predetermined shield box, and
said shield box includes a support member using said cyclo-olefin polymer in a plating grade and a plating formed on said support member, and is formed integrally with said antenna element.

4. The cell phone according to claim 1, wherein said plating is formed on a main surface of said support member by an MID.

5. The cell phone according to claim 1, wherein said plating is formed on a main surface of said support member by printing.

6. A built-in antenna of a cell phone which is built in said cell phone and has a support member of a dielectric (15) between an antenna element (2a) and a ground (6),
wherein said dielectric (15) is constituted by a support member of a cyclo-olefin polymer blending styrene type rubber, polyolefin type rubber or both of them, and
said antenna element (2) is a plating formed on a main surface of said support member.

7. The built-in antenna of a cell phone according to claim 6, wherein said dielectric (15) is obtained by using said cyclo-olefin polymer blending polyolefin type rubber.

8. The built-in antenna of a cell phone according to claim 6, wherein said ground is constituted by a predetermined shield box, and
said shield box includes a support member using said cyclo-olefin polymer in a plating grade and a plating formed on said support member, and is formed integrally with said antenna element.

9. The built-in antenna of a cell phone according to claim 6, wherein said plating is formed on a main surface of said support member by an MID.

10. The built-in antenna of a cell phone according to claim 6, wherein said plating is formed on a main surface of said support member by printing.
